Europäisches Patentamt

(19) **European Patent Office**

**Office européen des brevets**

(11) Publication number: **0 186 608**

**A1**

(12) # EUROPEAN PATENT APPLICATION

(21) Application number: **85630182.5**

(51) Int. Cl.⁴: **F 16 B 45/00**

(22) Date of filing: **31.10.85**

(30) Priority: **28.11.84 US 675796**

(43) Date of publication of application:
**02.07.86 Bulletin 86/27**

(84) Designated Contracting States:
**DE FR GB IT**

(71) Applicant: **REXNORD INC.**
**350 N. Sunny Slope**
**Brookfield, WI 53005(US)**

(72) Inventor: **Jensen, Carl B.**
**2761 W. 225th Street**
**Torrance California 90505(US)**

(72) Inventor: **Zoller, William R.**
**5911 Kingsbriar**
**Yorba Linda California 92686(US)**

(74) Representative: **Weydert, Robert et al,**
**Office Dennemeyer S.à.r.l. 21-25 Allée Scheffer P.O. Box 41**
**L-2010 Luxembourg(LU)**

(54) **Grommet assembly for a composite or like structure.**

(57) A grommet assembly (12) for use in composite structures (37) or the like is provided. The assembly (12) includes a profiled head (13), a body or lug portion (17), a protruding portion (21) opposite the head (13), and a separate spacer member (26). The composite structure (37) is situated between the head (13) and the spacer member (26), with the body or lug portion (17) extending within an opening (36) of the structure (37). The protruding portion (21) is deformed outwardly to lie flush with a hole (34) in the spacer member (26). Upon installation the assembly is mechanically locked into the structure, positively captivating the opening (36) in the composite structure, providing load bearing surfaces for a fastener (39) installed therein, preventing delamination and cracking of the structure as a result, and preventing the installed assembly from rotating relative to the structure (37).

FIG 9

FIG 8

EP 0 186 608 A1

The present invention relates to grommets for fasteners and in particular to grommets for use in materials formed of distinct parts, i.e., composite structures.

In certain industries, e.g., aerospace, materials are continually being developed to meet the performance demands of new technology. Composites are one example of a new type of material which will compete with traditional metallic materials for the construction of much of the new technology. As the materials for the structure of an item such as aircraft components change, so must the fastener technology which secures the structure's elements and attachments together. Hence, the development of the present invention.

The present invention is a grommet assembly designed to allow the installation of fastener inserts or studs into composite type materials. Without the use of the present invention such studs or inserts would fail in the composite materials. The present invention has a two-part construction which positively captivates the installation opening and distributes bearing loads from the fastener to the grommet assembly and into the composite structure in a manner which prevents delamination and cracking of the composite structure around the installation opening. A profiled head formed integral with an elongated lug portion comprise one part of the invention, with a second part being a spacer member. The head lies flush with one side of the composite structure, the lug portion extends through the prepared opening in the structure, and the spacer member is installed so as to lie flush against the opposite side of the composite structure. The installed assembly, in essence, "contains" and controls the opening. As a result, the present invention provides industries a unique fastener technology which meets new technology performance demands at costs for installation and repair which are competitive with or below the costs of known, commercially available fastener technology.

These and other features of the present invention will be described in further detail in the detailed description of the preferred embodiment which follows:

A more thorough understanding of the present invention

0186608

will be gained by reading the following description of the preferred embodiments with reference to the accompanying drawings in which:

Figure 1 is a top plan view of the grommet portion of a preferred embodiment of the present invention.

Figure 2 is a side elevational view of the grommet portion of the preferred embodiment.

Figure 3 is a bottom plan view of the grommet portion of the preferred embodiment.

Figure 4 is a top plan view of the spacer member of a preferred embodiment of the present invention.

Figure 5 is a side elevational view of the spacer member of the preferred embodiment.

Figure 6 is a bottom plan view of the spacer member of the preferred embodiment.

Figure 7 is a plan view of a prepared opening in a composite structure for installation of the preferred embodiment of the present invention.

Figure 8 is a perspective view showing the pre-installation arrangement of the preferred embodiment relative to the composite structure.

Figure 9 is a cross-sectional view of the preferred embodiment as it would appear in the composite structure during installation.

Figure 10 is a cross-sectional view of the preferred embodiment as it would appear installed together with a stud fastener component in a composite structure.

In the drawings identical or like reference numerals are used throughout the several views to indicate the same or like elements of the present invention.

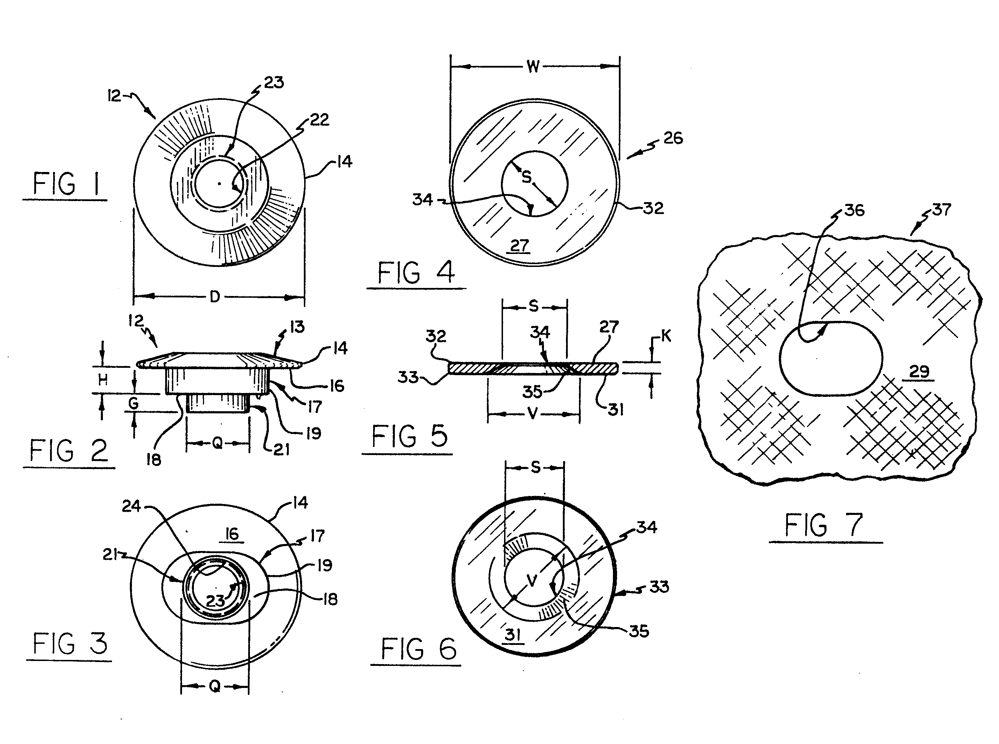

The present invention is comprised of two components, i.e., a grommet and a spacer member, and a prepared opening in a composite structure. With reference to Figs. 1-8, these three items will each be described.

0186608

In Figs. 1-3 and Fig. 8 a preferred embodiment of the grommet 12 of the invention is illustrated. At a first end of the grommet 12 a profiled head 13 is provided. The head 13 has an outer diameter D and a peripheral edge 14 which is preferably rounded. In side elevation the head 12 has a truncated cone or trapezoidal appearance with a flat undersurface 16 allowing flush mounting against a flat surface of a composite structure. The head 13 is preferably profiled to allow use in airflow areas, e.g., aircraft jet engines, access doors, etc., with corners or edges being rounded or otherwise treated to prevent fretting of the composite material in direct contact with the corner or edge. Extending from the undersurface 16 of the head 13 and radially inward a predetermined distance from the head edge 14 is an oblong body or lug portion 17. Fig. 3 shows the generally oblong form of this portion of the grommet. In the preferred embodiment the height H of the lug portion 17 is preferably no greater than the thickness T of that portion of the composite structure in which it is to be installed. Extending from the end 18 of the lug portion 17 opposite the grommet head 13, and radially inward from the outer surface 19 of the lug portion, is a cylindrical protruding end 21 having a height G. The height G is predetermined by the thickness of the spacer member and the thickness T of the composite structure. A hole 22 extends through the grommet from the first end or head 13 to the second or protruding end 21. A female thread 23 is provided for that portion of the hole within the head 13 and the oblong lug portion 17. In the preferred embodiment the length of the hole within the cylindrical protruding end 21 is left unthreaded leaving a smooth inner wall 24 therein.

Turning now to Figs. 4-6 and Fig. 8, the design of the spacer member 26 of the preferred embodiment may be appreciated. The spacer member 26 has a size, or as in the case of the preferred embodiment a diameter W, substantially equal to the diameter D of the grommet head. This member is preferably disk-like in configuration having a flat upper surface 27 for flush mounting along a side 28 of the composite structure opposite to the side 29 on which the grommet head 13 is mounted. This member also has a second or lower surface 31 which

0186608

is substantially flat or smooth. The member 26 has a depth K. The peripheral edges or corners 32, 33 of the member 26 are rounded or otherwise treated to allow use in airflow areas and to prevent fretting of the composite material contacted by the edges of member 26. A centrally-located hole 34 extends through the member 26 from one surface 27 to the second surface 31. In the preferred embodiment this hole 34 has a truncated cone portion 35 when viewed in cross-section from a side-elevation. The hole 34 in the preferred embodiment is an opening which at the upper surface 27 has a diameter S greater than the outer diameter Q of the grommet protruding end 21. The diameter of the hole 34 gradually increases to a diameter V at the second surface 31 of the spacer member 26. This particular design for the hole 34 will be better appreciated after a discussion of the installation of the invention which follows hereinafter. The spacer member 26 may be formed from bar or sheet stock. The actual selection of the type of raw material from which to make the present invention will depend upon the user's requirements as to weight and compatibility with the composite material. Corrosion factors must be considered as well as strength and affordability.

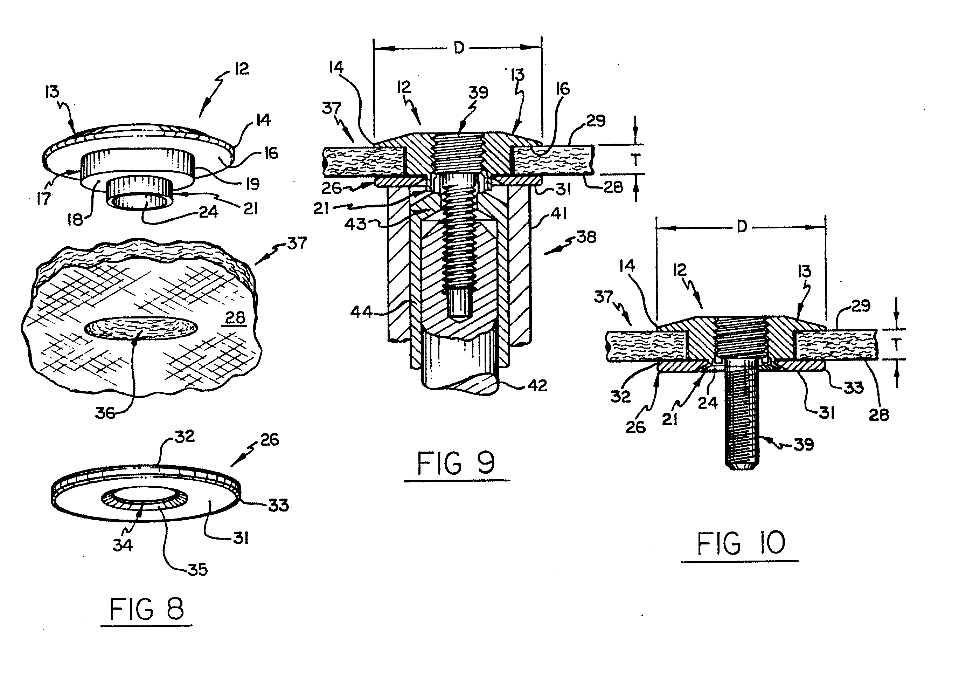

In Figs. 7 and 8 that portion of the composite structure into which the present invention is installed is shown. In the preferred embodiment of the present invention an opening 36 in the composite structure is prepared in a selected size and shape. The method for preparation of the opening 36 is dictated by the type of composite material used. The size and shape of the opening 36 is generally dictated by the lug portion 17 of the grommet. In the preferred embodiment, the opening 36 is oblong and substantially equivalent in size to the outer perimeter of the grommet lug portion 17.

To understand how the invention is installed and used, reference is now made to Figs. 8-10. The grommet second end 21 is inserted into the opening 36 in the composite structure 37 and pushed through the opening 36 until the grommet head undersurface 16 lies flat against the composite structure and the second or protruding end 21 appears extending from the opposite side 28 of the composite structure 37. The spacer member 26 is then fitted onto the protruding end 21 of the grommet 12 until it lies flush against the undersurface 28 of the composite structure 37. In Fig. 9 it can be seen that prior to installation the protruding end 21 of the grommet 12 contacts the spacer member 26 only for a short distance immediately adjacent the lug portion 17. The majority of the protruding end 21 is spaced away from the spacer member opening 34 as the protruding end has a right cylindrical form in contrast to the truncated cone portion 35 of the spacer member hole 34.

When the two parts are positioned flush with the composite structure, a tool 38 containing an insert or stud (as shown in the illustrated preferred embodiment) 39 is used to complete the installation process. The tool 38 is generally commercially available for the type of fastener shown in the preferred embodiment. Thus the complete tool has not been illustrated in the drawings, and a full description in detail of its parts and its operation is not believed necessary for a person skilled in the art to practice the invention. In Fig. 9 the outer sleeve 41 of the tool 38 lies against the exposed surface 31 of the spacer member 26 when the fastener 39, e.g., a male-threaded stud insert, is driven by a mandrel assembly 42 into the grommet hole 22. This action provides the initial clamping force around the opening 36. The driver 44 of the tool is then activated. The nose portion 43 of the driver 44 of the tool is driven into contact with the protruding end 21 of the grommet 12. The force applied by the tool causes this portion of the grommet to flare outwardly until it is flush against the hole and truncated cone portion of the spacer member 26. When this has been accomplished, the tool 38 is removed. The flaring action allows the finally installed assembly to maintain the clamping or compressive forces around the opening 36. The resulting installation is shown in Fig. 10.

In Fig. 10 it can be seen that the present invention provides a grommet assembly, constructed of a material which is compatible to that of the composite material, which completely surrounds and positively captivates the opening 36 in the composite structure 37. The installed assembly is mechanically locked to the structure by the grommet head 13 bearing upon the one surface 29 of the composite structure 37 and the flared protruding end 21 of the grommet bearing upwardly against the spacer member 26. This member 26 in turn bears against the opposite surface 28 of the composite structure. In view of the relationship between the lug portion height H and the thickness T of the composite structure, compressive forces are exerted upon the portion of the composite structure immediately surrounding and defining the opening 36. As a result, the opening 36 is positively captivated and delamination and cracking of the structure 37 in this area is prevented and eliminated by the invention. The combined forces serve also to lock the fastener assembly from any axial displacement relative to the composite structure. The assembly is further locked from any rotational movement by the non-circular configuration of the opening 36 which together with the lug portion 17 provide an anti-rotation feature for the installed assembly.

From the foregoing description of the preferred embodiment, the advantages and unique features of the present invention may be fully appreciated. The components of the invention are constructed and installed to provide a grommet assembly which eliminates the cracking and delamination problems inherent with composite structures. Together the installed components provide load-distributing bearing surfaces as well as a mounting surface for fastener components, e.g., a stud or insert which allows accessories external to the structure to be mounted thereto, e.g., a fuel line, bracketry, etc. The installed grommet assembly is mechanically locked to the structure and is prevented from being removed from the structure even in the event that a fastener installed therein fails. Damaged fasteners may thus be removed and replaced without removing or damaging the grommet assembly or the composite structure. A positive, anti-rotation feature is built into the grommet. The design of the grommet head is aerodynamically clean allowing its use in and on airflow surfaces. Finally, the grommet assembly insulates the composite structure from the fastener component. This prevents any corrosion from occurring in the composite structure in the event a dissimilar or incompatible material is used for the fastener component.

It will be appreciated by those skilled in the art that the invention's embodiment may be modified from that which is shown in the preferred embodiment.  Thus, the invention is considered limited only by the claims which follow.

CLAIMS

1.        A grommet assembly adapted for installation in an opening in a composite structure, said grommet assembly comprising:

a grommet having a first end portion, a second end portion opposite said first end portion, a body extending between said first and said second end portions and constructed and arranged for insertion into an opening in a composite structure, and means for receiving a fastener component constructed and arranged for installation therein; and

a spacer member constructed and arranged for installation between said grommet second end portion and the composite structure adjacent thereto in a manner securing said grommet and said spacer member together with the composite structure opening being positively captivated therebetween.

2.        The grommet assembly of claim 1 wherein said grommet body is constructed and arranged relative to the opening in the composite structure such that rotation of said grommet relative to the structure is prevented when pre-determined loads are applied to a fastener component installed therein.

3.        The grommet assembly of claim 2 wherein said grommet body and the opening in the composite structure are oblong and said grommet body has a thickness equal to that of the composite structure.

FIG 1

12  23  22  14

D

FIG 2

12  13  14  16  17  19  21

H  G  Q  18

FIG 3

24  14  16  17  19  18

21  23  Q

FIG 4

W

34  S  26  32  27

FIG 5

S  34  27  K

32  33  35  V  31

FIG 6

S

34  33  35  V  31

FIG 7

36  37  29

1 / 2

0186608

FIG 8

FIG 9

FIG 10

European Patent
Office

**EUROPEAN SEARCH REPORT**

**0186608**

Application number

EP 85 63 0182

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 077 858 (SOCIETE INDUSTRIELLE DE MECANIQUE ET D'AUTOMATION DU FAUCIGNY (SIMAF)) * figure 5 * | 1-3 | F 16 B 45/00 |
| Y | DE-A-3 227 686 (OMIKRON) * figure c * | 1-3 | |
| Y | DE-U-1 825 699 (KRONE) * figure 6 * | 1-3 | |
| Y | GB-A-2 112 895 (SEALED POWER CORP.) * figure 2 * | 1-3 | |
| Y | US-A-3 314 138 (DOUBLE) * figure 5 * | 1-3 | TECHNICAL FIELDS SEARCHED (Int. Cl.4) |
| Y | US-A-3 561 792 (CYCOWICZ) * figure 2 * | 1-3 | F 16 B 45/00<br>F 16 B 5/04<br>F 16 B 37/06 |
| Y | US-A-4 253 226 (T. TAKEDA) * figures 2, 4b * | 1-3 | |
| | --- -/- | | |

The present search report has been drawn up for all claims

| Place of search | Date of completion of the search | Examiner |
|---|---|---|
| BERLIN | 21-02-1986 | ZAPP E |

| DOCUMENTS CONSIDERED TO BE RELEVANT | | | Page  2 |
|---|---|---|---|
| Category | Citation of document with indication, where appropriate, of relevant passages | Relevant to claim | CLASSIFICATION OF THE APPLICATION (Int Cl.4) |
| Y | ENGINEERS DIGEST, vol. 43, no. 5, March 1982, page 8, London, GB; Article "Single-blow captive-nut system for sheet and plate" \* columns 2, 3 \* | 1-3 | |
| | ----- | | |
| | | | TECHNICAL FIELDS SEARCHED (Int. Cl.4) |
| The present search report has been drawn up for all claims | | | |

| Place of search | Date of completion of the search | Examiner |
|---|---|---|
| BERLIN | 21-02-1986 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82